# EUROPÄISCHE PATENTSCHRIFT

(11) **EP 3 331 749 B1**
(45) Veröffentlichungstag und Bekanntmachung des Hinweises auf die Patenterteilung: **17.04.2019**
(21) Anmeldenummer: 16741649.4
(22) Anmeldetag: 25.07.2016
(51) Int. Cl.: B62D 1/28

(54) **VERFAHREN ZUM LENKEN EINES FAHRZEUGES**
METHOD FOR STEERING A VEHICLE
PROCÉDÉ PERMETTANT DE DIRIGER UN VÉHICULE

(30) Priorität: 06.08.2015 DE 102015215052
(43) Veröffentlichungstag der Anmeldung: 13.06.2018
(73) Patentinhaber: Bayerische Motoren Werke Aktiengesellschaft, 80809 München (DE)
(72) Erfinder: SCHÖLZEL, Matthias, 81369 Muenchen (DE); ALBRECHT, Johannes, 82024 Taufkirchen (DE)
(86) Internationale Anmeldenummer: PCT/EP2016/067684
(87) Internationale Veröffentlichungsnummer: WO 2017/021192

(56) Entgegenhaltungen:
- EP-A1- 2 253 499
- EP-A1- 2 821 319

## Beschreibung

Die Erfindung betrifft ein Verfahren zum Lenken eines Fahrzeuges sowie ein Fahrzeug zum Durchführen des Verfahrens, nach dem Oberbegriff des Anspruchs 1. Als nächstliegender Stand der Technik wird die EP 2 253 499 A1 erachtet.

Insbesondere betrifft die Erfindung eine Steuerung eines Lenksystems für Personenkraftwagen mit Motor zur Lenkunterstützung oder alleinigen Lenkung (steer-by-wire). Der Motor wird teilweise oder gänzlich dazu verwendet, die Querführung des Fahrzeugs durch eine fahrzeugeigene Steuerung zu übernehmen. Damit der Fahrer jederzeit in der Lage ist, die Lenkaufgabe wieder vollständig zu übernehmen, wird eine automatische Querführung des Fahrzeugs durch eine Lenkungsregelung nach Erkennung eines Lenkeingriffs durch den Fahrer abgeschaltet.

Bei bekannten Lenksystemen mit einer elektronischen Lenkungsregeleinheit, die eine vorgegebene Fahrtrajektorie mittels automatischen Lenkeingriffen einstellt, wird üblicherweise beim Übergang der automatischen Lenkungsregelung vom eingeschalteten in den ausgeschalteten Zustand der automatische Lenkeingriff ebenfalls beendet. Daraus folgt, dass das durch den automatischen Lenkeingriff an der Lenkung anliegende Lenkmoment zunächst ruckartig abgebaut wird, bis das am Lenksystem anliegende Lenkmoment allein aufgrund des durch den Fahrer am Lenkrad eingebrachte Handmoment das Lenkmoment im Lenksystem wieder ansteigen lässt. Dieser ruckartige Einbruch des Lenkmoments führt zu einer spürbaren Verringerung der durch die Lenkungsregeleinheit eingestellten Krümmung der Fahrtrajektorie, die betragsmäßig und ggf. richtungsmäßig nicht mit der vom Fahrer erwarteten und durch seinen händischen Lenkeingriff angezeigten Krümmungsänderung übereinstimmt.

In der eingangs genannten Schrift ist für den Fall, dass der Fahrer aus einer Automatikphase bewusst selbst die Steuerung übernehmen möchte, das zuvor im automatischen Lenkeingriff aufgebrachte Lenkmoment gegebenenfalls "gerampt" deaktiviert wird. Eigentlicher Inhalt dieses bekannten Standes der Technik ist es dabei, zu erkennen oder zu bewerten, ob der Fahrer tatsächlich bewusst die Steuerung übernehmen möchte, oder ob er bspw. lediglich aus Unaufmerksamkeit ein Handmoment an das Lenkrad angelegt hatte. Letzteres ist nicht Thema der vorliegenden Erfindung.

Aufgabe der vorliegenden Erfindung ist es vielmehr, ein Verfahren zum Lenken eines Fahrzeuges anzugeben, das einen sicheren Betrieb des Fahrzeugs ermöglicht, wobei bei einem händischen Lenkeingriff durch den Fahrer während eines automatischen Lenkeingriffs durch eine eingeschaltete Lenkungsregelung einen Einbruch der Krümmung der zuvor automatisch eingestellten Fahrtrajektorie verhindert werden soll.

Die Lösung der Aufgabe erfolgt durch die Merkmale der unabhängigen Ansprüche. Die Unteransprüche zeigen vorteilhafte Ausgestaltungen der Erfindung.

Somit wird die Aufgabe gelöst durch ein Verfahren zum Lenken eines Fahrzeuges. Die Kräfte zum Lenken der Räder des Fahrzeuges werden durch ein Lenkmoment erzeugt, welches im Folgenden als M_{L} bezeichnet wird. Das Lenkmoment M_{L} wird mittels einer mechanischen Lenkung und/oder einem Lenkaktuator aufgebracht.

Bei einer herkömmlichen Lenkung, also einer mechanischen Verbindung zwischen Lenkrad und den gelenkten Rädern, erzeugt der Lenkaktuator ein zusätzliches Moment, das dem vom Fahrer aufgebrachten Handmoment entgegen oder gleichgerichtet ist. Der Lenkaktuator ist dabei vergleichbar dem Antrieb einer Servolenkung. Bei entsprechender Ansteuerung kann der Lenkaktuator auch zum automatischen Lenken des Fahrzeugs verwendet werden. Dabei bedarf es keines Handmomentes.

Alternativ zur herkömmlichen Lenkung kann auch ein steer-by-wire System verwendet werden. Bei einem steer-by-wire System gibt es keine mechanische Verbindung zwischen dem Lenkerrad und den Rädern. Das Handmoment wird lediglich über einen Sensor erfasst und an den Lenkaktuator übertragen.

In dem erfindungsgemäßen Verfahren wird das Fahrzeug zunächst in einer Automatikphase betrieben. Dabei erfolgt ein automatisches Lenken des Fahrzeugs, indem ein Steuergerät ein Automatikmoment M_{AF} errechnet. Während der Automatikphase wird der Lenkaktuator angesteuert, um genau dieses errechnete Automatikmoment M_{AF} zu erzeugen. Während der Automatikphase bringt der Fahrer am Lenkrad kein Handmoment M_{MF} ein. Dementsprechend entspricht das Lenkmoment M_{L} dem Automatikmoment M_{AF}.

Es wird ein Fahrereingriff während der Automatikphase erfasst. Des Weiteren erfolgt ein Erfassen des eingebrachten Handmoments M_{MF}. Das Erfassen des Fahrereingriffs erfolgt vorteilhafterweise durch das Erfassen des Handmoments M_{MF}. Alternativ oder zusätzlich kann der Fahrereingriff auch durch weitere Sensoren oder Kameras erfasst werden.

Sobald der Fahrer in die automatische Lenkung eingreift, beginnt die sogenannte Eingriffsphase. Dabei wird das errechnete Automatikmoment M_{AF} als Lenkmoment M_{L} beibehalten. Dieses Beibehalten erfolgt entweder durch Ignorieren des Handmoments M_{MF} bei einem steer-by-wire System oder durch Ausregeln des Handmoments M_{MF} bei einer herkömmlichen Lenkung. Dabei sinkt oder steigt das Automatikmoment M_{AF} zum Ausgleich des Handmomentes M_{MF}. In der Eingriffsphase hat somit die Betätigung des Lenkrades durch den Fahrer keinerlei Auswirkung auf die Querlenkung des Fahrzeuges.

Die Eingriffsphase dauert so lange an, bis das Handmoments M_{MF} ein bestimmtes Schwellmoment M_{S} überschritten hat. Erfindungsgemäß ist dabei das Schwellmoment M_{S} größer Null und unter zeitlicher Betrachtung nicht konstant.

Nach der Eingriffsphase folgt die Übergabephase. In der Übergabephase erfolgt ein Reduzieren des Automatikmoments M_{AF}. Das Lenkmoment M_{L} und somit die tatsächliche Querführung des Fahrzeuges entspricht der Summe aus Handmoment M_{MF} und Automatikmoment M_{AF}.

Durch die Notwendigkeit des Überdrückens des definierten Schwellmoments M_{S} bekommt der Fahrer eine bessere haptische Rückmeldung, dass das System zur automatischen Lenkungsregelung aktiv ist. Ein anschließender Abfall des Automatikmoments M_{AF} gibt eine haptische Rückmeldung, dass das System abgeschaltet wird und der Fahrer wieder für die Lenkaufgabe verantwortlich ist.

Durch das Einstellen eines konstanten Lenkmoments M_{L} bis zur Überschreitung des definierten Schwellmoments M_{S} in der Eingriffsphase wird sichergestellt, dass das Aufbringen des Schwellmoments M_{S} zur Abschaltung der automatischen Lenkungsregelung keine unerwünschten Einflüsse auf die bis dahin noch aktive automatische Lenkungsregelung hat.

Wie bereits erwähnt, ist erfindungsgemäß vorgesehen, dass das Schwellmoment M_{S} während der Eingriffsphase über die Zeit abnimmt. Dabei nimmt das Schwellmoment M_{S} besonders bevorzugt degressiv ab. Durch die Definition eines zeitlich variablen Werts für das Schwellmoment M_{S} können unbeabsichtigte, starke Lenkeingriffe ausgeregelt werden, ohne dem Fahrer die Kontrolle über das Fahrzeug zu entziehen. Das System bleibt bei kurzen Stößen weiterhin aktiv.

Dabei ist insbesondere vorgesehen, dass das Schwellmoment M_{S} am Anfang der Eingriffsphase einen Anfangswert aufweist und auf einen konstanten Minimalwert abfällt. Der Minimalwert ist dabei größer Null. Vorteilhafterweise beträgt der Anfangswert zumindest das 3-fache, vorzugsweise zumindest das 4-fache, des Minimalwerts. Der Minimalwert stellt sicher, dass auch dauerhafte, nicht beabsichtigte Lenkeingriffe des Fahrers nicht zum Ausschalten der Automatik führen.

Weiter kann vorgesehen sein, dass während der Übergabephase das Automatikmoment in einem kontinuierlichen Verlauf auf Null reduziert wird. Diese kontinuierliche Rücknahme des Automatikmoments M_{AF} erfolgt über einen Zeitraum, der größer Null ist. Die kontrollierte Rücknahme der automatischen Lenkungsregelung ermöglicht es dem Fahrer, die Lenkaufgabe zu übernehmen, ohne dabei eine unerwünschte Änderung der Fahrtrajektorie durch Einbruch des Lenkmoments M_{L} zu erfahren.

Weiter kann vorgesehen sein, dass sowohl bei einem zum Automatikmoment M_{AF} gleichgerichteten als auch bei einem zum Automatikmoment M_{AF} entgegen gerichteten Handmoment M_{MF} in der Eingriffsphase das Automatikmoment M_{AF} als Lenkmoment M_{L} beibehalten wird. Dies bedeutet, auch wenn der Fahrer entgegen der automatischen Steuerung lenken möchte, muss er zunächst das Schwellmoment M_{S} überwinden, bis das Automatikmoment M_{AF} reduziert wird.

Die Erfindung umfasst des Weiteren ein Fahrzeug. Das Fahrzeug ist insbesondere ein zweispuriges Straßenfahrzeug. Das Fahrzeug ist zum Durchführen des beschriebenen Verfahrens ausgebildet. Insbesondere umfasst das Fahrzeug hierzu einen Lenkaktuator, der entsprechend angesteuert werden kann.

Weitere Einzelheiten, Merkmale und Vorteile der Erfindung ergeben sich aus der nachfolgenden Beschreibung und den Figuren. Es zeigen:
- Fig.1: eine schematische Darstellung zum erfindungsgemäßen Verfahren mit einem Übernahmeszenario bei Verringerung des Kurvenradius,
- Fig.2: eine schematische Darstellung zum erfindungsgemäßen Verfahren mit einem zeitweise gegensinnig zur Lenkaufgabe gerichtetem Automatikmoment M_{AF},
- Fig.3: eine schematische Darstellung zum erfindungsgemäßen Verfahren mit einem Übernahmeszenario bei Vergrößerung des Kurvenradius,
- Fig.4: eine schematische Darstellung zum erfindungsgemäßen Verfahren mit einem Handmoment über dem Lenkwinkel und einem Vergleich zwischen Übersteuern und dem Verlauf bei nicht assistiertem Fahren, und
- Fig.5: eine schematische Darstellung zum erfindungsgemäßen Verfahren mit dem Handmoment über dem Lenkwinkel und einer Übernahme während einer Kurvenfahrt.

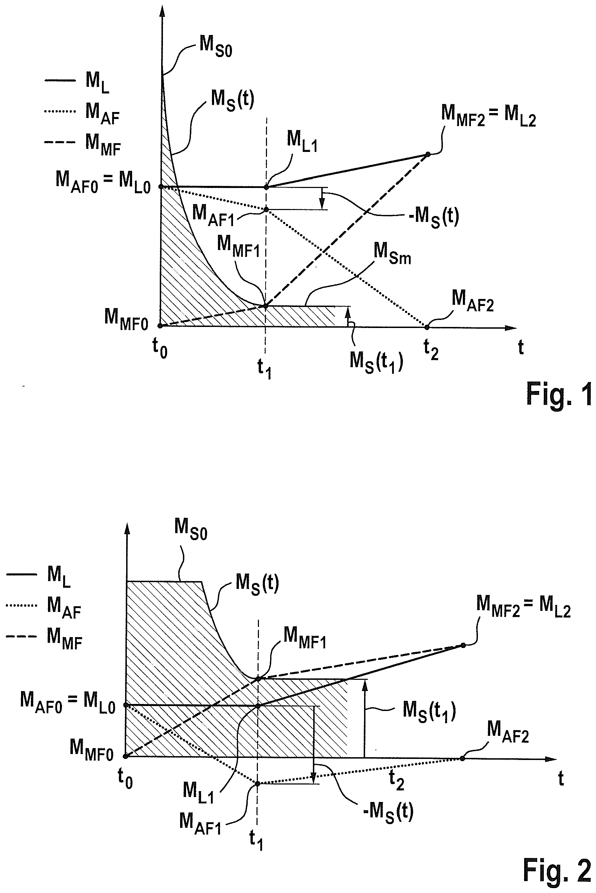

Im Folgenden wird anhand der Figuren 1 bis 5 ein Ausführungsbeispiel zum erfindungsgemäßen Verfahren erläutert.

Die Figuren zeigen ein Lenkmoment M_{L}. Die Kräfte zum Lenken der Räder des Fahrzeuges werden durch ein Lenkmoment erzeugt, welches im Folgenden als M_{L} bezeichnet wird.

Ferner zeigen die Figuren ein Automatikmoment M_{AF}. Das Automatikmoment M_{AF} wird von einem entsprechenden Steuergerät des Fahrzeuges errechnet. Das Automatikmoment M_{AF} gibt die Kräfte zum Einstellen einer gewünschten Trajektorie des Fahrzeugs vor. Somit ist das Automatikmoment M_{AF} das vom System angeforderte Lenkmoment zur automatischen Regelung der Querführung. Dieses ergibt sich beispielsweise aus einer sensorischen Erfassung der Fahrbahn und/oder aus einem Navigationssystem.

Darüber hinaus zeigen die Figuren ein Handmoment M_{MF}. Das Handmoment M_{MF} ist das vom Fahrer eingebrachte händische Lenkmoment inklusive aller darauf basierenden vom Lenksystem angeforderten zusätzlichen Lenkmomente. Diese zusätzlichen Lenkmomente dienen z.B. zur Lenkkraftunterstützung oder zur Darstellung eines definierten Lenkgefühls.

Vor dem Zeitpunkt t₀ befindet sich das Fahrzeug in der Automatikphase. Dabei erfolgt ein automatisches Lenken des Fahrzeuges. Der Fahrer erzeugt kein Handmoment M_{MF} am Lenkrad.

Zum Zeitpunkt t₀ erzeugt der Fahrer am Lenkrad ein Handmoment M_{MF}. Mit dem Erfassen dieses Handmoments M_{MF} beginnt die Eingriffsphase. Die Eingriffsphase endet mit dem Erreichen eines Schwellmoments M_{S} und somit zum Zeitpunkt t₁.

An die Eingriffsphase schließt sich zum Zeitpunkt t₁ die Übergabephase an. In der Übergabephase wird das Automatikmoment M_{AF} kontinuierlich reduziert. Die tatsächliche Querführung des Fahrzeuges und somit das Lenkmoment M_{L} werden immer mehr durch das Handmoments M_{MF} bestimmt.

Die sämtlichen skizzierten Momente sind so dargestellt, dass sie unter Einbeziehung möglicher Übersetzungsverhältnisse in ihren Auswirkungen auf die Fahrzeugquerführung einem Lenkeingriff durch dem Fahrer entsprechen.

Bis zum Zeitpunkt t₀ entspricht das gesamte am Lenksystem anliegende Moment M_{L0} dem von der automatischen Lenkungsregelung zur Querführung des Fahrzeugs angeforderten Automatikmoment M_{AF0}. Ab dem Zeitpunkt t₀ erfolgt die Erkennung eines Lenkeingriffs durch den Fahrer. Die Richtung des eingebrachten Moments entspricht in Fig.1 dem bereits vorhandenen Automatikmoment M_{AF} - der Fahrer will in diesem Fall die bereits eingestellte Krümmung der Fahrtrajektorie weiter erhöhen. Bis zum Zeitpunkt t₁ wird das Automatikmoment M_{AF} so eingestellt, dass mit dem Anstieg des Handmoments M_{MF} in Summe das Lenkmoment M_{L} konstant auf dem Niveau bleibt, welches zur Einhaltung der vom Fahrzeug geplanten Fahrtrajektorie nötig ist.

Das Automatikmoment M_{AF} kann auch ein gegensinnig zur Lenkaufgabe gerichtetes Moment darstellen, wie in Fig.2 dargestellt. Der Verlauf des Handmoments M_{MF}, und damit auch der Verlauf des Automatikmoments M_{AF}, ist dabei nicht vom System festgelegt und kann je nach Fahrer und Fahrsituation stark variieren.

Zum Zeitpunkt t₁ überschreitet das Handmoment M_{MF} einen definierten Schwellwert M_{S}. Das Automatikmoment M_{AF} zur automatischen Lenkungsregelung wird darauf bis zu einem Zeitpunkt t₂ kontinuierlich verringert, was einer Abschaltung der Automatikfunktion entspricht.

Die Zeitdauer zwischen t₁ und t₂, sowie der zeitliche Verlauf des abfallenden Automatikmoments M_{AF} ist dabei so zu wählen, dass der Fahrer das für die gewünschte Krümmung nötige Lenkmoment kontrolliert übernehmen kann und nicht von einem Einbruch des Automatikmoments M_{AF} überrascht wird. Das bedeutet die Rücknahme des Automatikmoments M_{AF} kann auf jeden beliebigen Verlauf durch Applikation festgelegt werden.

Das zur Übernahme der Lenkaufgabe durch den Fahrer nötige Schwellmoment M_{S} ist abhängig von der Zeit und fällt von einem hohen Niveau kommend ab, bis es nach definierter Zeit einen konstanten Minimalwert M_{Sm} einnimmt. Der Anfangswert M_{S0} wird so gewählt, dass unbewusste Lenkeingriffe durch z.B. Stöße nicht als bewusste Fahrereingabe fehlinterpretiert werden. Der Schwellwert sinkt darauf auf einen konstanten Wert, welcher so niedrig gewählt ist, dass er von jedem möglichen Fahrer für eine Übernahme der Lenkaufgabe erreicht werden kann.

Nach Abschluss der Fahrerübernahme entspricht das vom Fahrer eingebrachte Handmoment M_{MF} dem gesamten Lenkmoment M_{L}. Das Handmoment M_{MF2} zum Zeitpunkt t₂ ist betragsmäßig über dem Lenkmoment M_{L0} zum Zeitpunkt t₀ skizziert, da dies dem ursprünglichen Fahrerwunsch nach einer stärkeren Krümmung der Fahrtrajektorie entspricht.

Die Fahrerübernahme kann im Zeitraum zwischen t₀ und t₂ zu jedem Zeitpunkt und über eine beliebige Dauer hinweg durch eine zusätzliche haptische Rückmeldung dem Fahrer angezeigt werden (z.B. Vibration über Unwuchtaktuator im Lenkrad/Lenkstrang oder Servomotor der Lenkung).

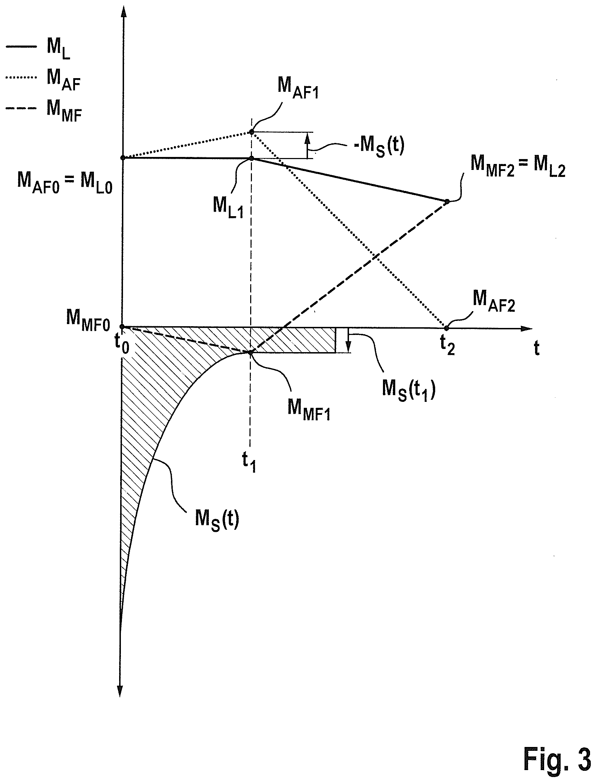

Fig.3 zeigt den Verlauf der Momente für den Fall, dass das vom Fahrer ab dem Zeitpunkt t₀ eingebrachte Handmoment M_{MF} entgegengesetzt der Richtung des bereits vorhandenen Automatikmoments M_{AF} gerichtet ist. Der Fahrer will in diesem Fall die eingestellte Krümmung der Fahrtrajektorie verringern. Das angestrebte Handmoment M_{MF2} ist dementsprechend betragsmäßig geringer skizziert als das Lenkmoment M_{L0} zum Zeitpunkt t₀.

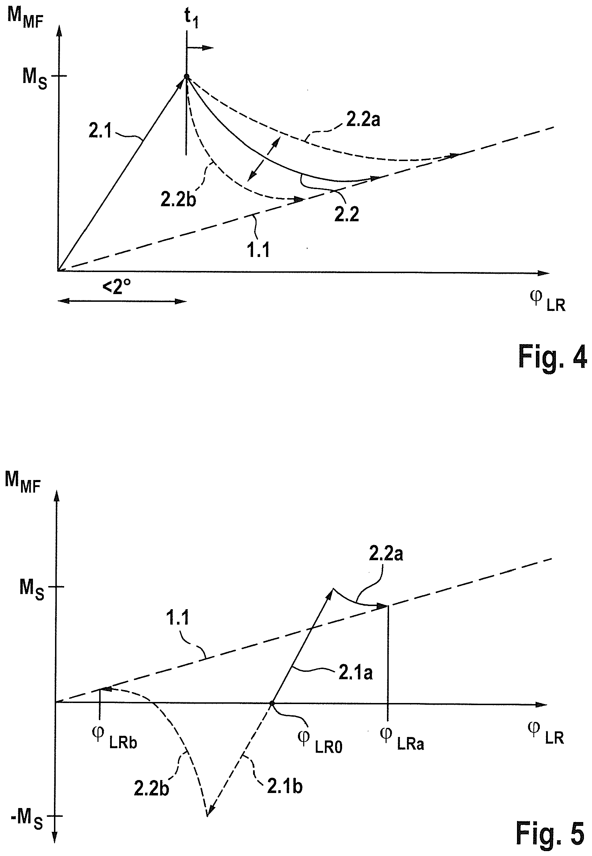

Fig.4 zeigt den Verlauf des Handmoments M_{MF} relativ zum Lenkradwinkel ϕ_{LR} bei normaler Fahrt ohne zusätzliche, die Querführung assistierende, Systeme (1.1) im Vergleich zu einem Verlauf beim Übersteuern einer aktiven automatischen Querführungsregelung durch den Fahrer (2.1 und 2.2). Die Darstellung zeigt dabei eine aktivierte automatische Querführung um die Nulllage.

Der Verlauf des Handmoments M_{MF} ohne aktiviertes Assistenzsystem ist linear mit flachem Anstieg über dem Lenkwinkel ϕ_{LR} skizziert (1.1). Im Gegensatz dazu weist der Verlauf bei aktivierter automatischer Querführung bis zum Erreichen des Schwellmoments M_{S} einen wesentlich steileren Anstieg auf (2.1). Der Gradient dieses Anstiegs entspricht dabei in etwa der Torsionssteifigkeit aller in Summe zwischen Lenkrad und Zahnstange befindlichen, das Handmoment M_{MF} übertragenden, Elemente des Lenkstrangs.

Nach dem Erreichen des Schwellmoments M_{S} bei t₁ gleicht sich das Handmoment M_{MF} durch die schrittweise Deaktivierung der automatischen Querführung an ein Niveau an, welches dem Lenkmoment M_{L} ohne aktivierte Assistenzsysteme entspricht (2.2). Der Verlauf des Handmoments M_{MF} ist dabei stark von der Reaktion des Fahrers und der Ausprägung der Funktion zur Deaktivierung der automatischen Querführung abhängig und damit variabel (z.B. 2.2a und 2.2b).
Fig.5 zeigt Handmomentverläufe bei Übersteurern einer automatischen Querführung während einer Kurvenfahrt. Am Lenkrad ist dabei bereits ein Lenkwinkel ϕ_{LR0} vom System eingestellt. Die Verläufe 2.1a und 2.1b zeigen auch hier den (u.U. negativen) Anstieg des Handmoments M_{MF} bis zum betragsmäßigen Erreichen des Schwellmoments M_{S}. Die Verläufe 2.2a und 2.2b zeigen wiederum den Übergang des Handmoments M_{MF} auf einen Wert der dem ohne aktiviertes Assistenzsystem zur Querführung entspricht (1.1).

2.1a und 2.2a zeigen dabei den Handmomentenverlauf zur Einstellung eines größeren Lenkwinkels (ϕ_{LRa}. 2.1b und 2.2b zeigen den Handmomentenverlauf zur Einstellung eines kleineren Lenkwinkels ϕ_{LRb.} Wie in Fig. 4 dargestellt sind auch in Fig. 5 die Verläufe 2.2a und 2.2b stark von der Reaktion des Fahrers und der Ausprägung der Funktion zur Deaktivierung der automatischen Querführung abhängig und damit variabel.

Durch die Notwendigkeit des Überdrückens eines definierten Schwellmoments M_{S} bekommt der Fahrer eine bessere haptische Rückmeldung, dass das System zur automatischen Lenkungsregelung aktiv ist. Ein anschließender Abfall des Automatikmoments M_{AF} gibt eine haptische Rückmeldung, dass das System abgeschaltet wird und der Fahrer wieder für die Lenkaufgabe verantwortlich ist.

Durch das Einstellen eines konstanten Lenkmoments M_{L} bis zur Überschreitung des definierten Schwellmoments M_{S} bei t₁ wird sichergestellt, dass das Aufbringen des Schwellmoments M_{S} zur Abschaltung der automatischen Lenkungsregelung keine unerwünschten Einflüsse auf die bis dahin noch aktive automatische Lenkungsregelung hat.

Durch die Definition eines zeitlich variablen Werts für das Schwellmoment M_{S} können unbeabsichtigte, starke Lenkeingriffe ausgeregelt werden, ohne dem Fahrer die Kontrolle über das Fahrzeug zu entziehen. Das System bleibt bei kurzen Stößen weiterhin aktiv.

Die kontrollierte Rücknahme der automatischen Lenkungsregelung zwischen t₁ und t₂ ermöglicht es dem Fahrer die Lenkaufgabe zu übernehmen ohne dabei eine unerwünschte Änderung der Fahrtrajektorie durch Einbruch des Gesamtlenkmoments zu erfahren.

## Patentansprüche

1. Verfahren zum Lenken eines Fahrzeuges, wobei die Kräfte zum Lenken der Räder durch ein Lenkmoment (M_{L}) erzeugt werden, und wobei das Lenkmoment (M_{L}) mittels einer mechanischen Lenkung und/oder einem Lenkaktuator aufgebracht wird, umfassend die folgenden Schritte:
• Automatikphase: Automatisches Lenken des Fahrzeuges, indem ein Steuergerät ein Automatikmoment (M_{AF}) errechnet und den Lenkaktuator zum Aufbringen des Automatikmoments (M_{AF}) ansteuert, sodass das Lenkmoment (M_{L}) dem Automatikmoment (M_{AF}) entspricht, wobei ein Fahrereingriff während der Automatikphase und ein vom Fahrer am Lenkrad eingebrachtes Handmoment (M_{MF}) erfasst werden,
• Eingriffsphase: Beibehalten des errechneten Automatikmoments (M_{AF}) als Lenkmoment (M_{L}) durch Ignorieren oder Ausregeln des Handmoments (M_{MF}), bis das Handmoment (M_{MF}) ein definiertes Schwellmoment (M_{S}) überschritten hat, wobei das Schwellmoment (M_{S}) größer Null ist, und
• Übergabephase: Reduzieren des Automatikmoments (M_{AF}) nach Überschreiten des Schwellmoments (M_{S}), wobei das Lenkmoment (M_{L}) der Summe aus Handmoment (M_{MF}) und Automatikmoment (M_{AF}) entspricht, **dadurch gekennzeichnet, dass** das Schwellmoment (M_{S}) während der Eingriffsphase über die Zeit (t) abnimmt.

2. Verfahren nach Anspruch 1, **dadurch gekennzeichnet, dass** das Schwellmoment (M_{S}) degressiv abnimmt.

3. Verfahren nach Anspruch 1 oder 2, **dadurch gekennzeichnet, dass** das Schwellmoment (M_{S}) am Anfang (t₀) der Eingriffsphase einen Anfangswert (M_{S0}) aufweist und auf einen konstanten Minimalwert (M_{Sm}) abfällt, wobei der Minimalwert (M_{Sm}) größer Null ist.

4. Verfahren nach Anspruch 3, **dadurch gekennzeichnet, dass** der Anfangswert (M_{S0}) zumindest das 3-fache, vorzugsweise zumindest das 4-fache, des Minimalwerts (M_{Sm}) beträgt.

5. Verfahren nach einem der vorangegangenen Ansprüche, **dadurch gekennzeichnet, dass** während der Übergabephase das Automatikmoment (M_{AF}) in einem kontinuierlichen Verlauf auf Null reduziert wird

6. Verfahren nach einem der vorangegangenen Ansprüche, **dadurch gekennzeichnet, dass** sowohl bei einem zum Automatikmoment (M_{AF}) gleichgerichteten als auch bei einem zum Automatikmoment (M_{AF}) entgegen gerichteten Handmoment (M_{MF}) in der Eingriffsphase das Automatikmoment (M_{AF}) als Lenkmoment (M_{L}) beibehalten wird.

7. Verfahren nach einem der vorhergehenden Ansprüche, **dadurch gekennzeichnet dass** das Fahrzeug für eine steer-by-wire Lenkung ausgebildet ist, wobei lediglich der Lenkaktuator das Lenkmoment (M_{L}) erzeugt, und wobei in der Eingriffsphase das Handmoment (M_{MF}) beim Ansteuern des Lenkaktuators ignoriert wird.

8. Verfahren nach einem der Ansprüche 1 bis 6, **dadurch gekennzeichnet, dass** das Fahrzeug eine mechanische Verbindung zwischen Lenkrad und Rädern umfasst, wobei in der Eingriffsphase das Handmoment (M_{MF}) beim Ansteuern des Lenkaktuators ausgeregelt wird.

9. Fahrzeug, insbesondere zweispuriges Straßenfahrzeug, ausgebildet zum Durchführen eines Verfahrens nach einem der vorhergehenden Ansprüche.

## Claims

1. A method for steering a vehicle, wherein the forces for steering the wheels are generated by a steering torque (M_{L}), and wherein the steering torque (M_{L}) is applied by means of a mechanical steering system and/or a steering actuator, said method comprising the following steps:
• in an automatic phase: automatically steering the vehicle by means of a control unit calculating an automatic torque (M_{AF}) and actuating the steering actuator to apply the automatic torque (M_{AF}), such that the steering torque (M_{L}) corresponds to the automatic torque (M_{AF}), wherein a driver intervention is detected during the automatic phase, and a manual torque (M_{MF}) which is applied to the steering wheel by the driver is detected;
• in an intervention phase: maintaining the calculated automatic torque (M_{AF}) as a steering torque (M_{L}) by ignoring or adjusting the manual torque (M_{MF}) until the manual torque (M_{MF}) has exceeded a defined threshold torque (M_{S}), wherein the threshold torque (M_{S}) is greater than zero; and
• in a transfer phase: reducing the automatic torque (M_{AF}) after the threshold torque (M_{S}) has been exceeded, wherein the steering torque (M_{L}) corresponds to a sum of the manual torque (M_{MF}) and automatic torque (M_{AF}),
**characterised in that** the threshold torque (M_{S}) decreases over time (t) during the intervention phase.

2. A method according to claim 1, **characterised in that** the threshold torque (M_{S}) decreases degressively.

3. A method according to claim 1 or 2, **characterised in that** the threshold torque (M_{S}) has an initial value (M_{S0}) at the start of the intervention phase and drops to a constant minimum value (M_{Sm}), wherein the minimum value (M_{Sm}) is greater than zero.

4. A method according to claim 3, **characterised in that** the initial value (M_{S0}) is at least 3 times, preferably at least 4 times the minimum value (M_{Sm}).

5. A method according to any one of the preceding claims, **characterised in that,** during the transfer phase, the automatic torque (M_{AF}) is reduced to zero in a continuous profile.

6. A method according to any one of the preceding claims, **characterised in that** in the intervention phase the automatic torque (M_{AF}) is maintained as the steering torque (M_{L}) both in a case of a manual torque (M_{MF}) which is directed in the same direction as the automatic torque (M_{AF}) and in a case of a manual torque (M_{MF}) which is directed counter to the automatic torque (M_{AF}).

7. A method according to any one of the preceding claims, **characterised in that** the vehicle is configured for steer-by-wire steering, wherein only the steering actuator generates the steering torque (M_{L}), and wherein, in the intervention phase, the manual torque (M_{MF}) is ignored during the actuation of the steering actuator.

8. A method according to any one of claims 1 to 6, **characterised in that** the vehicle comprises a mechanical connection between the steering wheel and the wheels, wherein, in the intervention phase, the manual torque (M_{MF}) is adjusted during the actuation of the steering actuator.

9. A vehicle, more especially a two-track road vehicle, configured to carry out a method according to any one of the preceding claims.

## Revendications

1. Procédé de braquage d'un véhicule selon lequel les forces de braquage des roues sont produites par un couple de braquages (M_{L}) et le couple de braquage (M_{L}) est appliqué au moyen d'une direction mécanique et/ou d'un actionneur de braquage, comprenant les étapes suivantes :
- phase automatique : braquage automatique du véhicule du fait qu'un appareil de commande calcule un couple automatique (M_{AF}) et commande l'actionneur de braquage pour appliquer le couple automatique (M_{AF}) de sorte que le couple de braquage (M_{L}) corresponde au couple automatique (M_{AF}), une intervention du conducteur pendant la phase automatique et un couple manuel (M_{MF}) appliqué par le conducteur sur la roue directrice étant détectés,
- phase d'intervention : maintien du couple automatique (M_{AF}) calculé en tant que couple de braquage (M_{L}) en ignorant ou en régulant le couple manuel (M_{MF}) jusqu'à ce que ce couple manuel (M_{MF}) ait dépassé un couple de seuil (M_{S}) défini, le couple de seuil (M_{S}) étant supérieur à zéro, et
- phase de transfert : réduction du couple automatique (M_{AF}) après avoir dépassé le couple de seuil (Ms), le couple de braquage (M_{L}) correspondant à la somme du couple manuel (M_{MF}) et du couple automatique (M_{AF}),
**caractérisé en ce que**
le couple de seuil (M_{S}) diminue en fonction du temps (t) pendant la phase d'intervention.

2. Procédé conforme à la revendication 1,
**caractérisé en ce que**
le couple de seuil (M_{S}) diminue progressivement.

3. Procédé conforme à la revendication 1 ou 2,
**caractérisé en ce que**
le couple de seuil (M_{S}) a une valeur de départ (M_{S0}) au début (t₀) de la phase d'intervention, et chute à une valeur minimum constante (M_{Sm}), la valeur minimum (M_{Sm}) étant supérieure à zéro.

4. Procédé conforme à la revendication 3,
**caractérisé en ce que**
la valeur de départ (M_{S0}) est au moins égale à 3 fois, de préférence à au moins 4 fois la valeur minimum (M_{Sm}).

5. Procédé conforme à l'une des revendications précédentes,
**caractérisé en ce que**
pendant la phase de transfert, le couple automatique (M_{AF}) est réduit à zéro de façon continue.

6. Procédé conforme à l'une des revendications précédentes,
**caractérisé en ce qu'**
aussi bien en présence d'un couple manuel (M_{MF}) orienté dans le même sens que le couple automatique (M_{AF}) qu'en présence d'un couple automatique (M_{AF}) orienté en sens opposé au couple manuel (M_{MF}), pendant la phase d'intervention, le couple automatique (M_{AF}) est maintenu en tant que couple de braquage (M_{L}).

7. Procédé conforme à l'une des revendications précédentes,
**caractérisé en ce que**
le véhicule est réalisé pour une direction assistée steer-by-wire, seul l'actionneur de braquage produisant le couple de direction (M_{L}) et dans la phase d'intervention le couple manuel (M_{MF}) étant ignoré lors de la commande de l'actionneur de braquage.

8. Procédé conforme à l'une des revendications 1 à 6,
**caractérisé en ce que**
le véhicule comporte une liaison mécanique entre la roue directrice et des roues, et dans la phase d'intervention le couple manuel (M_{MF}) est régulé par commande de l'actionneur de braquage.

9. Véhicule, en particulier véhicule à deux lignes de roue réalisé pour permettre la mise en oeuvre du procédé conforme à l'une des revendications précédentes.
